# NEUE EUROPÄISCHE PATENTSCHRIFT

(11) **EP 1 250 832 B2**
(45) Veröffentlichungstag und Bekanntmachung des Hinweises auf die Entscheidung über den Einspruch: **17.10.2012**
(45) Hinweis auf die Patenterteilung: 19.12.2007
(21) Anmeldenummer: 02007454.8
(22) Anmeldetag: 30.03.2002
(51) Int. Cl.: A01D 43/08

(54) **Einrichtung zur Steuerung der Position einer Austragseinrichtung einer landwirtschaftlichen Erntemaschine**
Device for controlling the position of a discharging device of an agricultural harvester
Dispositif pour contrôler la position d'un dispositif de déchargement d'une machine agricole de récolte

(30) Priorität: 20.04.2001 DE 10119279
(43) Veröffentlichungstag der Anmeldung: 23.10.2002
(73) Patentinhaber: DEERE & COMPANY, Moline, Illinois 61265-8098 (US)
(72) Erfinder: Kormann, Georg, 66424 Homburg/Kirrberg (DE)
(74) Vertreter: Holst, Sönke

(56) Entgegenhaltungen:
- EP-A- 0 666 018
- EP-A- 1 151 652
- DD-A- 115 629
- DE-A1- 19 848 127
- JP-A- 7 298 774
- JP-A- 10 000 015
- US-A- 4 376 609
- Prospekt, Claas, Feldhäcksler Jaguar, 900-890-870-850-830

## Beschreibung

Die Erfindung betrifft eine Einrichtung zur Steuerung der Position einer Austragseinrichtung einer landwirtschaftlichen Erntemaschine, mit einer Positionierungseinrichtung, die eingerichtet ist, die Position der bewegbar an der Erntemaschine angeordneten Austragseinrichtung einzustellen, einer von einem Bediener der Erntemaschine bedienbaren Eingabeeinrichtung und einer Steuereinrichtung, die mit der Positionierungseinrichtung und der Eingabeeinrichtung in Wirkverbindung steht, wobei die Steuereinrichtung mit einer Speichereinrichtung zusammenwirkt, in der mindestens ein Sollwert abspeicherbar ist, der einer Sollposition der Austragseinrichtung entspricht, der Sollwert aus der Speichereinrichtung abrufbar ist, so dass die Positionierungseinrichtung die Austragseinrichtung in die Sollposition verbringt und der in der Speichereinrichtung abgelegte Sollwert veränderbar ist.

Bei der Ernte von landwirtschaftlichen Gütern auf einem Feld ist es gängige Praxis, dass eine Erntemaschine ein neben der Erntemaschine herfahrendes Transportfahrzeug mit geerntetem Gut belädt. Das Transportfahrzeug, beispielsweise ein Schlepper mit Anhänger oder ein Lastwagen, wird durch eine Austragseinrichtung der Erntemaschine mit dem geernteten Gut beladen, beispielsweise bei einem Feldhäcksler durch einen Austragsschacht und bei einem Mähdrescher durch ein Entladerohr. Die Austragseinrichtung ist in der Regel um eine vertikale Achse drehbar an der Erntemaschine befestigt und zwischen einer Ruhestellung, in der sie etwa parallel zur Längsachse der Erntemaschine orientiert ist, und einer Arbeitsposition, in der sie sich quer zur Fahrtrichtung der Erntemaschine erstreckt, verschwenkbar. Zusätzlich kann die Höhe des abgabeseitigen Endes der Austragseinrichtung variierbar sein, wie auch die Position einer Auswurfklappe, welche den Winkel definiert, unter dem das geerntete Gut abgegeben wird.

Im einfachsten Fall wird die Position der Austragseinrichtung manuell durch den Fahrer der Erntemaschine gesteuert. Dabei ist als nachteilig anzusehen, dass die Steuerung der Position der Austragseinrichtung einen beträchtlichen Teil der Aufmerksamkeit des Fahrers in Anspruch nimmt.

Außerdem wurde z. B. in der EP 0 666 018 A vorgeschlagen, eine landwirtschaftliche Erntemaschine mit einer Einrichtung zur selbsttätigen Steuerung der Position der Austragseinrichtung auszustatten, die eingerichtet ist, die Lage eines Transportfahrzeugs zu erfassen und die Austragseinrichtung entsprechend zu positionieren. Als nachteilig ist der relativ hohe Aufwand anzusehen. In der genannten Druckschrift wird auch ein Schalter mit drei Stellungen zur Übersteuerung der selbsttätigen Steuerung vorgeschlagen, die es ermöglicht, die Austragseinrichtung nach links, rechts und in die Ruhestellung zu verbringen. Dabei ist als nachteilig anzusehen, dass die mit dem Schalter ansteuerbaren Betriebspositionen der Austragseinrichtung (links und rechts) nicht immer zur Befüllung des Transportfahrzeugs geeignet sind, so dass sich manuelle oder selbsttätige Korrekturen der Position der Austragseinrichtung nicht erübrigen.

Die JP 10 000 015 A beschreibt einen Mähdrescher mit einem um die Hochachse schwenkbaren und höhenverstellbaren Austragrohr. Die zur Verstellung des Austragrohrs dienenden Aktoren sind mit einer Steuerung verbunden, welche mit Eingabemitteln zum Heben, Senken und Drehen des Austragsrohrs versehen sind. Eine Speichertaste ermöglicht es, eine durch geeignete Sensoren erfasste Information über die aktuelle Position des Austragrohrs abzuspeichern. Basierend auf dieser Information hält die Steuerung durch geeignete Ansteuerung der Aktoren das Austragrohr in der abgespeicherten Position fest. Dadurch soll das Austragrohr auch beim Befahren unebenen Geländes gegenüber dem Ladefahrzeug in einer konstanten Position verbleiben. Es ist aber keine Möglichkeit vorgesehen, die abgespeicherte Position wieder abzurufen, nachdem das Austragrohr später aus der abgespeicherten Position in eine andere Stellung verbracht wurde.

Die nach dem Prioritätsdatum des vorliegenden Schutzrechts veröffentlichte EP 1 151 652 A beschreibt einen Feldhäcksler mit einem motorisch verschwenkbaren Auswurfkrümmer. Es wird vorgeschlagen, dass der Auswurfkrümmer über eine Steuervorrichtung aus einer ersten Betriebsstellung in eine zweite Betriebsstellung motorisch verschwenkbar ist, die der an der vertikalen Längsmittelebene gespiegelten ersten Betriebsstellung des Auswurfkrümmers entspricht. Es besteht demnach auch hier keine Möglichkeit, den Auswurfkrümmer aus einer beliebigen Position in eine dauerhaft abspeicherbare Sollposition zu verbringen.

Das der Erfindung zugrunde liegende Problem wird darin gesehen, eine Einrichtung zur Steuerung der Position einer Austragseinrichtung einer landwirtschaftlichen Erntemaschine zu schaffen, die sich durch Bedienerfreundlichkeit und Preiswürdigkeit auszeichnet.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Eine landwirtschaftliche Erntemaschine wird mit einer Steuerung versehen, die mit einer durch den Bediener der Erntemaschine bedienbaren Eingabeeinrichtung, einer Speichereinrichtung und einer Positionierungseinrichtung zusammenwirkt, die zur Einstellung der Position der Austragseinrichtung eingerichtet ist. Die Erfindung schlägt vor, in einer Speichereinrichtung einen Sollwert dauerhaft abzulegen, der mittels der Eingabeeinrichtung abrufbar ist. Anhand des abgerufenen Sollwerts verbringt die Positionierungseinrichtung die Austragseinrichtung in eine dem Sollwert entsprechende Sollposition. Der in der Speichereinrichtung abgelegte Sollwert ist veränderbar.

Auf diese Weise wird es möglich, eine oder mehrere Positionen der Austragseinrichtung der Erntemaschine nach Wunsch des Bedieners abzuspeichern und beim Erntevorgang abzurufen. Die Vorteile der Erfindung bestehen in der Arbeitserleichterung für den Bediener der Erntemaschine. Während eines Feldeinsatzes müssen immer wieder die gleichen Grundpositionen der Austragseinrichtung angefahren werden, was insbesondere bei hinter der Erntemaschine herfahrenden Transportfahrzeugen im Stand der Technik stets einer längeren Zeit und mehreren Anpassungsvorgängen bedarf. Da diese Position für ein hinter bzw. neben der Erntemaschine herfahrendes Transportfahrzeug abgespeichert ist, kann sie mittels der Eingabeeinrichtung beispielsweise durch Knopfdruck, Verstellen eines Schalters oder durch akustische Eingabe abgerufen werden und der Fahrer der Erntemaschine kann sich wesentlich besser auf die notwendigen Fahrmanöver konzentrieren. Da keine Einrichtung zur Erfassung der Position des Transportfahrzeugs erforderlich ist, kann die Erfindung preisgünstig realisiert werden.

Bezüglich der Eingabe des Sollwerts in die Speichereinrichtung bestehen im Rahmen des erfindungsgemäßen Gedankens verschiedene Möglichkeiten. Es wäre denkbar, den Sollwert in einem austauschbaren Speichermittel abzulegen, z. B. einem EPROM, das bereits werksseitig entsprechend der Vorgaben des Kunden programmiert wird. Soll der Sollwert geändert werden, wird einfach das Speichermittel gegen ein anderes, in dem der neue Sollwert abgelegt ist, ausgetauscht. Es wäre auch möglich, den Sollwert durch Datenfernübertragung zu ändern, wobei im Werk oder im Büro des Inhabers der Erntemaschine, der gewünschte Sollwert in einen Computer eingegeben und durch eine Datenfernübertragung (über Radio oder Funktelefonverbindung) zur Erntemaschine übertragen wird. Auch eine Übertragung durch eine Diskette oder ein ähnliches portables Speichermedium vom Computer auf die Erntemaschine wäre denkbar. Als Speichermittel kommen auch (vorzugsweise austauschbare) binäre Schalter (DIP-Schalter) in Frage, die entsprechend der gewünschten Position der Austragseinrichtung eingestellt werden.

Vorzugsweise ist aber der Sollwert durch den Bediener der Erntemaschine mittels der Eingabeeinrichtung veränderbar. Das kann zum einen durch direkte Eingabe des Sollwerts mittels der Eingabeeinrichtung erfolgen. Es wird somit Daten eingegeben, die eine Information über die Sollposition enthalten. Dabei können mittels der Eingabeeinrichtung Winkel und/oder Höheneingaben eingegeben werden. Denkbar wäre auch, dem Bediener eine Auswahl von Transportfahrzeugen zu geben, indem beispielsweise eine Liste angezeigt wird, aus der er das jeweils benutzte Transportfahrzeug auswählt, so dass ein dem ausgewählten Transportfahrzeug entsprechender Sollwert in der Speichereinrichtung abgelegt wird.

Zum anderen wäre denkbar, dass der Bediener die Austragseinrichtung unter Verwendung der Eingabeeinrichtung in die gewünschte Sollposition verbringt, und dass nach Erreichen der Sollposition auf eine entsprechende Eingabe in die Eingabeeinrichtung hin ein der momentanen Position der Austragseinrichtung entsprechender Wert als Sollwert in der Speichereinrichtung abgelegt wird. Dieser Wert kann durch Sensoren ermittelt werden, die eingerichtet sind, die Position der Austragseinrichtung zu erfassen. Denkbar wäre aber auch, den Sollwert aus in der Steuereinrichtung vom Einstellvorgang der Austragseinrichtung her vorliegenden Daten abzuleiten und in der Speichereinrichtung dauerhaft abzulegen.

Der in der Speichereinrichtung abgelegte Sollwert kann den Schwenkwinkel der Austragseinrichtung um eine zumindest etwa vertikal orientierte Achse, die Höhe des Auslassendes der (z. B. in vertikaler Richtung teleskopierbaren oder um eine horizontale Achse schwenkbaren) Austragseinrichtung bzw. den Schwenkwinkel einer Auswurfklappe am stromab liegenden Ende der Austragseinrichtung definieren. Die Steuereinrichtung veranlasst entsprechende Aktoren der Positionierungseinrichtung, sich in eine dem Sollwert entsprechende Sollposition zu bewegen, sobald mittels der Eingabeeinrichtung der Sollwert abgerufen wird.

In den Zeichnungen ist ein nachfolgend näher beschriebenes Ausführungsbeispiel der Erfindung dargestellt. Es zeigt:
- Fig. 1: eine Erntemaschine in Seitenansicht und in schematischer Darstellung,
- Fig. 2: ein Blockdiagramm einer Einrichtung zur Steuerung der Position der Austragseinrichtung der Erntemaschine, und
- Fig. 3: eine Ansicht einer Eingabeeinrichtung.

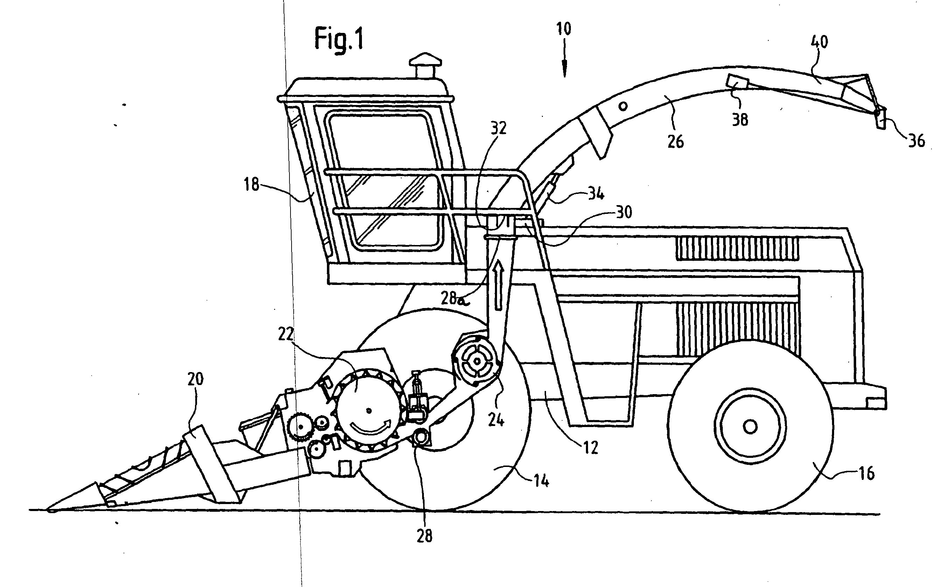

Eine in Figur 1 gezeigte Erntemaschine 10 in der Art eines selbstfahrenden Feldhäckslers baut sich auf einem Rahmen 12 auf, der von vorderen und rückwärtigen Rädern 14 und 16 getragen wird. Die Bedienung der Erntemaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird einer Häckseltrommel 22 zugeführt, die es in kleine Stücke häckselt und es einer Fördervorrichtung 24 aufgibt. Das Gut verlässt die Erntemaschine 10 zu einem nebenher fahrenden Transportfahrzeug über eine Austragseinrichtung 26 in Form eines drehbaren Austragsschachts. Zwischen der Häckseltrommel 22 und der Fördervorrichtung 24 erstreckt sich eine Nachzerkleinerungsvorrichtung 28, durch die das zu fördernde Gut der Fördervorrichtung 24 tangential zugeführt wird.

Die Position der Austragseinrichtung 26 kann durch drei Aktoren 30, 34, 38 verändert werden, die eine Positionierungseinrichtung zur Einstellung der Position der Austragseinrichtung 26 bilden. Ein erster Aktor 30 in Form eines Hydraulikmotors dient zur Drehung der an einem Drehkranz 28a um eine vertikale Achse drehbar gelagerten Austragseinrichtung 26. Der Aktor 30 ermöglicht somit, die Austragseinrichtung 26 nach hinten in die in Figur 1 dargestellte Transportposition zu drehen, oder sie links oder rechts neben die Erntemaschine 10 zu verbringen. Ein zweiter Aktor 34 in Form eines Hydraulikzylinders ist eingerichtet, die Austragseinrichtung 26 um eine an ihrem stromauf liegenden Ende liegende, horizontale Achse 32 zu verschwenken. Der zweite Aktor 34 definiert somit die Höhe des stromab liegenden Endes der Austragseinrichtung 26. Ein dritter Aktor 38 in Form eines Hydraulikzylinders dient zur Verschwenkung einer Auswurfklappe 36 am stromab liegenden Ende 40 der Austragseinrichtung 26. Die verstellbare Auswurfklappe 36 ermöglicht, den Winkel einzustellen, unter dem das geerntete Gut die Austragseinrichtung 26 verlässt. Die Aktoren 34 und 38 sind einfach- oder doppelt wirkende Hydraulikzylinder, wobei bei einfach wirkenden Hydraulikzylindern die Eigengewichte der Austragseinrichtung 26 bzw. der Auswurfklappe 36 die Rückbewegung ermöglichen. In der dargestellten Ausführungsform ist der Aktor 34 einfach- und der Aktor 38 doppeltwirkend. Der Aktor 30 kann die Austragseinrichtung 26 im Uhrzeigersinn und (zeitlich daran anschließend) im Gegenuhrzeigersinn drehen. Die Austragseinrichtung 26 als solche und die Aktoren 30, 34, 38 sind im Stand der Technik grundsätzlich bekannt, s. beispielsweise EP 1 040 745 A, EP 0 760 202 A und EP 0 672 339 A.

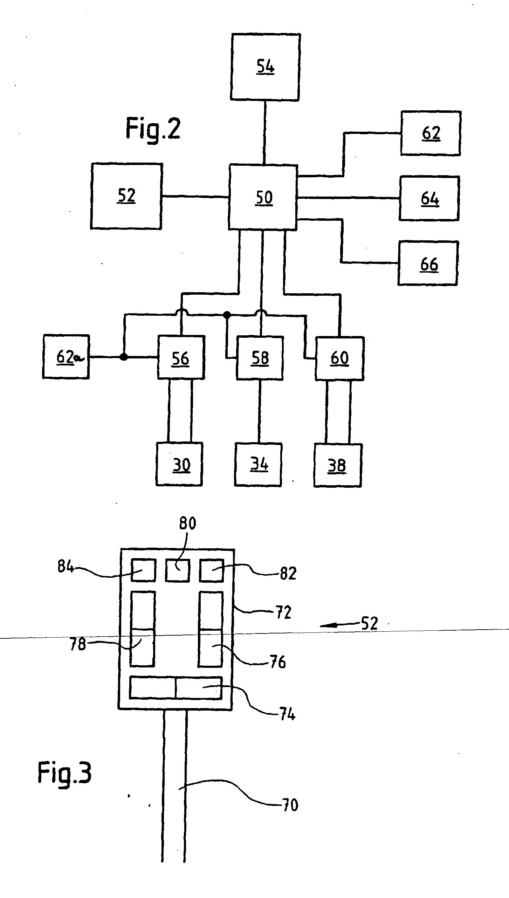

In Figur 2 ist ein Blockdiagramm wiedergegeben, das den Aufbau der Einrichtung zur Steuerung der Position der Austragseinrichtung 26 zeigt. Eine Steuereinrichtung 50 in Form eines Mikroprozessors oder Mikrocontollers ist mit einer Eingabeeinrichtung 52 und einer Speichereinrichtung 54 verbunden.

Weiterhin ist die Steuereinrichtung mit drei elektromagnetisch gesteuerten Ventilen 56, 58, 60 verbunden, die ihrerseits eingangsseitig hydraulisch mit einer Einrichtung 62a zur Bereitstellung unter Betriebsdruck stehender Hydraulikflüssigkeit (z. B. einem Druckbehälter oder einer Pumpe) und ausgangsseitig mit jeweils einem der Aktoren 30, 34 und 38 in Wirkverbindung stehen. Die Aktoren 30 und 38 sind durch jeweils zwei Hydraulikleitungen mit den Ventilen 56 bzw. 60 verbunden, da der Aktor 30 ein in zwei Drehrichtungen betreibbarer Hydraulikmotor und der Aktor 38 ein doppelt wirkender Hydraulikzylinder ist.

Schließlich ist die Steuereinrichtung 50 mit drei Sensoren 62, 64 und 66 verbunden. Der Sensor 62 erfasst die Position des ersten Aktors 30, liefert also eine Information über den jeweiligen Schwenkwinkel der Austragseinrichtung 26. Der zweite Sensor 64 erfasst die Position des zweiten Aktors 34 und stellt eine Information über den Schwenkwinkel der Austragseinrichtung 26 um die horizontale Achse 32 bereit. Der dritte Sensor 66 liefert eine Information über die Stellung des dritten Aktors, d. h. den Schwenkwinkel der Auswurfklappe 36. Die in Figur 1 nicht eingezeichneten Sensoren 62, 64, 66 können in das Gehäuse der Aktoren 30, 34, 38 integriert oder an beliebiger, geeigneter Stelle im Abstand von den Aktoren 30, 34, 38 angeordnet sein. Die Sensoren 62, 64 und 66 sind vorzugsweise mit Analog-Digitalwandlern ausgestattet, so dass die Steuereinrichtung 50 digitale Daten erhält. Denkbar wäre aber auch, insbesondere über separate Leitungen, der Steuereinrichtung 50 von den Sensoren 62, 64 und 66 bereitgestellte analoge Werte zu übersenden.

Die Steuereinrichtung 50 ist in der Regel über eine Busleitung, in der Regel in Form eines CAN-Busses, mit der Eingabeeinrichtung 52, den Ventilen 56, 58, 60 und den Sensoren 62, 64 und 66 verbunden, um den Verdrahtungsaufwand zu reduzieren. Die Speichereinrichtung 54 kann monolithisch in die Steuereinrichtung 50 integriert oder durch Leitungen mit ihr verbunden sein. Die Speichereinrichtung 54 ist nicht-flüchtig, um zu verhindern, dass die in ihr gespeicherten Daten nach Abschalten der Zündung oder bei Batterieausfall der Erntemaschine 10 verloren gehen. Dazu kann eine Stützbatterie vorgesehen sein, oder es finden statische RAMs Verwendung.

In der Figur 3 ist die Eingabeeinrichtung 52 detaillierter dargestellt. Sie ist in Form eines Multifunktionshandgriffs 72 realisiert, der an der Oberseite eines schwenkbaren Arms 70 angebracht ist. Der Arm 70 ist seitlich neben dem Arbeitsplatz in der Fahrerkabine 18 angeordnet. Durch Verschwenken des Arms 70 um eine horizontale, an seinem unteren Ende quer zur Fahrtrichtung angeordnete Schwenkachse kann in an sich bekannter Weise die Fahrgeschwindigkeit der Erntemaschine 10 vorgegeben werden.

Der Multifunktionshandgriff 72 weist drei Wippschalter 74, 76, 78 auf. Außerdem weist er drei Tastschalter 80, 82, 84 auf. Die Wippschalter 74, 76, 78 und die Tastschalter 80, 82, 84 sind alle elektrisch mit der Steuereinrichtung 50 verbunden.

Der erste Wippschalter 74 dient zur Betätigung des ersten Aktors 30. Wird die linke Hälfte des ersten Wippschalters 74 niedergedrückt, wird über die Steuereinrichtung 50 und das erste Ventil 56 der erste Aktor 30 derart mit Hydraulikflüssigkeit beaufschlagt, dass sich die Austragseinrichtung 26 in eine erste Richtung dreht, z. B. im Uhrzeigersinn. Wird analog die rechte Hälfte des ersten Wippschalters 74 niedergedrückt, wird über die Steuereinrichtung 50 und das erste Ventil 56 der erste Aktor 30 derart mit Hydraulikflüssigkeit beaufschlagt, dass sich die Austragseinrichtung in die entgegengesetzte Richtung dreht. Wird der erste Wippschalter 74 nicht betätigt, steht der erste Aktor 30 still.

Der zweite Wippschalter 76 dient zur Betätigung des zweiten Aktors 34. Wird die obere Hälfte des zweiten Wippschalters 76 niedergedrückt, wird über die Steuereinrichtung 50 und das zweite Ventil 58 der zweite Aktor 34 derart mit Hydraulikflüssigkeit beaufschlagt, dass die Austragseinrichtung in vertikaler Richtung um die Achse 32 nach oben verschwenkt. Wird analog die untere Hälfte des zweiten Wippschalters 76 niedergedrückt, wird über die Steuereinrichtung 50 und das zweite Ventil 58 der zweite Aktor 34 von Hydraulikflüssigkeit entleert, so dass sich die Austragseinrichtung 26 in die entgegengesetzte Richtung nach unten absenkt. Wird der zweite Wippschalter 76 nicht betätigt, steht der zweite Aktor 34 still.

Der dritte Wippschalter 78 dient zur Betätigung des dritten Aktors 38. Wird die obere Hälfte des dritten Wippschalters 78 niedergedrückt, wird über die Steuereinrichtung 50 und das dritte Ventil 60 der dritte Aktor 38 derart mit Hydraulikflüssigkeit beaufschlagt, dass die Auswurfklappe 36 nach oben verschwenkt wird. Wird analog die untere Hälfte des dritten Wippschalters 76 niedergedrückt, wird über die Steuereinrichtung 50 und das dritte Ventil 60 der dritte Aktor 38 derart mit Hydraulikflüssigkeit beaufschlagt, dass sich die Auswurfklappe 36 in die entgegengesetzte Richtung dreht. Wird der dritte Wippschalter 78 nicht betätigt, steht der dritte Aktor 38 still.

Auf diese Weise ermöglichen die drei Wippschalter 74, 76 und 78, die Austragseinrichtung 26 derart zu positionieren, dass von der Erntemaschine 10 aufgenommenes Gut auf ein Transportfahrzeug gelangt. Die manuelle Einstellung ist jedoch zeitaufwändig und lenkt den Fahrer der Erntemaschine 10 von anderen Aufgaben ab.

Die Funktion der Tastschalter ist Folgende: Wird der erste Tastschalter 80 betätigt, werden aus der Speichereinrichtung 54 Daten als Sollwerte abgerufen, die einer gewünschten ersten Sollposition der Austragseinrichtung 26 entsprechen. Die Steuereinrichtung 50 steuert die Aktoren 30, 34 und 38 über die Ventile 56, 58 bzw. 60 derart an, dass die von den Sensoren 62, 64 und 66 gemessenen Ist-Werte den abgespeicherten Sollwerten entsprechen. Dabei können die Aktoren 30, 34 und 38 gleichzeitig oder nacheinander betätigt werden. Analog werden die Aktoren 30, 34 und 38 in eine in der Speichereinrichtung 54 abgespeicherte, zweite (in der Regel andere) Sollposition verbracht, wenn der zweite Tastschalter 82 betätigt wird.

Der dritte Tastschalter 84 hat eine Abspeicherfunktion: Wenn er niedergedrückt wird und anschließend der Tastschalter 80 (oder 82) betätigt wird, werden in der Speichereinrichtung 54 dem gedrückten Tastschalter 80 (oder 82) zugeordnete Sollwerte abgespeichert, die der aktuellen Position der Austragseinrichtung 26 entsprechen. Dabei wird eine Information über die aktuelle Position der Austragseinrichtung 26 aus den von den Sensoren 62, 64 und 66 bereitgestellten Daten entnommen. Wird anschließend der erste Tastschalter 80 (oder 82) betätigt, bewirkt die Steuereinrichtung 50, dass die Aktoren 30, 34 und 38 die Austragseinrichtung 26 selbsttätig in die nunmehr neu abgespeicherte Position verbringen. Vorzugsweise weist der Multifunktionshandgriff 72 noch weitere an sich bekannte, in der Zeichnung nicht dargestellte Tastschalter auf, die es ermöglichen, die Austragseinrichtung 26 durch die Steuereinrichtung 50 in eine der folgenden Positionen zu verbringen: Transportposition, linke Transportfahrzeugposition, rechte Transportfahrzeugposition und hintere Transportfahrzeugposition. Die Transportfahrzeugpositionen ermöglichen, das Erntegut auf einem an den jeweiligen Positionen befindliches Transportfahrzeugposition auszutragen. Auch eine entsprechende Menüführung unter Verwendung einer Anzeigeeinrichtung wäre denkbar, um die Anzahl der Tastschalter gering zu halten.

Auf diese Weise kann der Bediener der Erntemaschine 10 die Austragseinrichtung 26 auf einfache Weise in eine Sollposition verbringen, in der ein Transportfahrzeug beladen wird, und die Sollposition zur Anpassung an ein anderes Transportfahrzeug unschwer ändern.

## Patentansprüche

1. Einrichtung zur Steuerung der Position einer Austragseinrichtung (26) einer landwirtschaftlichen Erntemaschine (10), mit einer Positionierungseinrichtung, die eingerichtet ist, die Position der bewegbar an der Erntemaschine (10) angeordneten Austragseinrichtung (26) einzustellen, einer von einem Bediener der Erntemaschine (10) bedienbaren Eingabeeinrichtung (52) und einer Steuereinrichtung (50), die mit der Positionierungseinrichtung und der Eingabeeinrichtung (52) in Wirkverbindung steht, wobei die Steuereinrichtung (50) mit einer Speichereinrichtung (54) zusammenwirkt, in der mindestens ein Sollwert dauerhaft abspeicherbar ist, der einer Sollposition der Austragseinrichtung (26) entspricht, der Sollwert mittels der Eingabeeinrichtung (52) aus der Speichereinrichtung (54) abrufbar ist, so dass die Positionierungseinrichtung die Austragseinrichtung (26) in die Sollposition verbringt und der in der Speichereinrichtung (54) abgelegte Sollwert veränderbar ist, **dadurch gekennzeichnet, dass** mindestens zwei Sollwerte in der Speichereinrichtung (54) abgelegt und abrufbar sind, die unterschiedlichen Sollpositionen der Austragseinrichtung (26) entsprechen, dass die Sollwerte mittels eines ersten und zweiten Tastschalters (80, 82) der Eingabeeinrichtung (52) aus der Speichereinrichtung (54) abrufbar sind und dass die Eingabeeinrichtung (52) einen dritten Tastschalter (84) umfasst, der eine Abspeicherfunktion hat und bewirkt, dass in der Speichereinrichtung (54) dem gedrückten ersten oder zweiten Tastschalter (80 oder 82) zugeordnete Sollwerte abgespeichert werden, die der aktuellen Position der Austragseinrichtung (26) entsprechen, wenn der dritte Tastschalter (84) niedergedrückt wird und anschließend der erste oder zweite Tastschalter (80 oder 82) betätigt wird.

2. Einrichtung nach Anspruch 1, **dadurch gekennzeichnet, dass** die Steuereinrichtung (50) mit Sensoren (62, 64, 66) zur Erfassung der jeweiligen Position der Austragseinrichtung (26) verbunden ist.

3. Einrichtung nach einem der Ansprüche 1 oder 2, **dadurch gekennzeichnet, dass** der Sollwert den Schwenkwinkel der Austragseinrichtung (26) um eine zumindest näherungsweise vertikale Achse und/oder die Höhe des Auslassendes (40) der Austragseinrichtung (26) und/oder den Schwenkwinkel einer Auswurfklappe (36) am stromab liegenden Ende der Austragseinrichtung (26) definiert.

4. Erntemaschine (10) mit einer Austragseinrichtung, **gekennzeichnet durch** eine Einrichtung nach einem der vorhergehenden Ansprüche.

## Claims

1. A device for controlling the position of a discharge device (26) of an agricultural harvesting machine (10), comprising a positioning device which is designed to set the position of the discharge device (26) which is arranged movably on the harvesting machine (10), an input device (52) which may be operated by an operator of the harvesting machine (10) and a control device (50), which cooperates with the positioning device and the input device (52), the control device (50) cooperating with a storage device (54), in which at least one desired value may be stored permanenty, which corresponds to a desired position of the discharge device (26), the desired value being able to be retrieved from the storage device (54) by means of the input device (52) so that the positioning device moves the discharge device (26) into the desired position and the desired value stored in the storage device (54) may be altered, **characterized in that** at least two desired values are stored and recallable in the storage device (54) that correspond to different desired positions of the discharge device (26), that the desired values can be recalled from the storage device (54) by means of a first and a second push button (80, 82)of the input device (52)and that the input device comprises a third push button (84) having a storage function and causing that desired values assigned to the first or second push button (80 or 82) are stored in the storage device (54) that correspond to the actual position of the discharge device (26) when the third push button (84) is depressed and subsequently the first or second push button (80 or 82) is actuated.

2. A device according to Claim 1, **characterized in that** the control device (50) is connected to sensors (62, 64, 66) for detecting the respective position of the discharge device (26).

3. A device according to Claim 1 or 2, **characterized in that** the desired value defines the pivot angle of the discharge device (26) about an at least approximately vertical axis, and/or the height of the outlet end (40) of the discharge device (26) and/or the pivot angle of an ejection flap (36) at the downstream end of the discharge device (26).

4. A harvesting machine (10) comprising a discharge device, **characterized by** a device according to one of the preceding claims.

## Revendications

1. Dispositif destiné à commander la position d'un dispositif de déchargement (26) d'une machine de récolte (10) agricole, comportant un dispositif de positionnement qui est conçu pour régler la position du dispositif de déchargement (26), monté de manière mobile sur la machine de récolte (10), un dispositif d'entrée (52) pouvant être utilisé par l'utilisateur de la machine de récolte (10), et un dispositif de commande (50) qui est en liaison active avec le dispositif de positionnement et le dispositif d'entrée (52), le dispositif de commande (50) coopérant avec un dispositif de mémoire (54), dans lequel peut être mémorisée au moins une valeur de consigne en permanence qui correspond à une position de consigne du dispositif de déchargement (26), la valeur de consigne pouvant être chargée à partir du dispositif de mémoire (54) au moyen du dispositif d'entrée (52), de telle sorte que le dispositif de positionnement amène le dispositif de déchargement (26) dans la position de consigne et la valeur de consigne stockée dans le dispositif de mémoire (54) pouvant être modifiée, **caractérisé en ce qu'**au moins deux valeurs de consigne, qui correspondent à des positions de consigne différentes du dispositif de déchargement (26), sont stockées dans le dispositif de mémoire (54) et peuvent être chargée à partir de ce dernier, que les valeurs de consigne peuvent être chargée à partir de le dispositif de mémoire (54) avec un bouton poussoir (80, 82) du dispositif d'entrée (52) et que le dispositif d'entrée (52) comprend un troisième bouton poussoir (84) ayant une fonction du sauvegarder et provoquant que des valeurs de consigne assignées au premier ou deuxième bouton poussoir (80 ou 82) sont stockées dans le dispositif de mémoire (54) correspondent au position actuelle du dispositif de déchargement (26) quand le troisième bouton poussoir (84) est pressé et après le premier ou deuxième bouton poussoir (80 ou 82) est pressé.

2. Dispositif selon la revendication 1, **caractérisé en ce que** le dispositif de commande (50) est relié à des capteurs (62, 64, 66) destinés à détecter la position respective du dispositif de déchargement (26).

3. Dispositif selon l'une quelconque des revendications 1 ou 2, **caractérisé en ce que** la valeur de consigne définit l'angle de pivotement du dispositif de déchargement (26) autour d'un axe au moins à peu près vertical et/ou la hauteur de l'extrémité de sortie (40) du dispositif de déchargement (26) et/ou l'angle de pivotement d'une trappe d'éjection (36) au niveau de l'extrémité arrière du dispositif de déchargement (26).

4. Machine de récolte (10) comportant un dispositif de déchargement, **caractérisée par** un dispositif selon l'une des revendications précédentes.
